**Europäisches Patentamt**

**European Patent Office**

**Office européen des brevets**

(19)

(11) **EP 1 058 169 A1**

(12) **EUROPÄISCHE PATENTANMELDUNG**

(43) Veröffentlichungstag:
06.12.2000 Patentblatt 2000/49

(51) Int Cl.⁷: **G05B 13/04**

(21) Anmeldenummer: **99810486.3**

(22) Anmeldetag: **03.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB RESEARCH LTD.**
**8050 Zürich (CH)**

(72) Erfinder:
• **Mossig, Kai Dr.**
**5400 Baden (CH)**

• **Plischke, Elmar**
**27755 Delmenhorst (DE)**

(74) Vertreter: **ABB Patent Attorneys**
**c/o ABB Business Services Ltd,**
**Intellectual Property (SLE-I),**
**Haselstrasse 16/699**
**5401 Baden (CH)**

(54) **Einrichtung und Verfahren zur Datenvalidierung**

(57) Es existieren Verfahren zur Abstimmung von Messdaten, auch Datenvalidierungsverfahren genannt, die garantieren, dass die Messdaten oder geschätzte Zustände eines Systems oder einer Anlage konsistent mit vorgegebenen physikalischen Randbedingungen sind. Im erfindungsgemässen Verfahren werden eine Menge von Sensoren sowie eine Menge von Randbedingungen derart bestimmt, dass nach Durchführen einer Datenvalidierung die Genauigkeit eines jeden geschätzten Zustands höher ist als eine bestimmte, für jeden Zustand einzeln vorgegebene Genauigkeit.

Dadurch wird es möglich, die Anforderungen an das Messsystem, d.h. an die Gesamtheit der Sensoren sowie das Verfahren zur Datenvalidierung, explizit vorzugeben. Durch das erfindungsgemässe Verfahren wird der Entwicklungsaufwand für Anlagen mit Datenvalidierung verringert, und die Notwendigkeit einer Datenvalidierung lässt sich beurteilen. Weiter lassen sich durch Elimination von nicht notwendigen Sensoren Kosten für den Bau und den Betrieb einer Anlage senken.

Fig. 1

EP 1 058 169 A1

**Beschreibung**

**Technisches Gebiet**

Die Erfindung bezieht sich auf das Gebiet der Leittechnik. Sie bezieht sich auf ein Verfahren und eine Einrichtung zur Datenvalidierung gemäss dem Oberbegriff der Patentansprüche 1 und 6.

**Stand der Technik**

Die Verfolgung des zeitlichen Verhaltens einer technischen Anlage, beispielsweise einer Produktionsanlage oder eines Kraftwerkes, erfordert eine andauernde Bestimmung von Systemgrössen, beispielsweise von Temperaturen, Drücken, Massenströmen, Spannungen oder Leistungen. Anhand solcher Grössen und anhand von Werten von Steuereingängen kann das System geregelt und das zukünftige Verhalten des Systems vorausgesagt, optimiert und in sicheren Grenzen gehalten werden. Derartige Systemgrössen werden mittels Sensoren bestimmt.

Die Messung sämtlicher benötigten Systemgrössen ist jedoch technisch oder wirtschaftlich nicht möglich oder sinnvoll. Deshalb müssen bestimmte Systemgrössen anhand von Messwerten anderer Grössen geschätzt werden. Aufgrund von Messrauschen, Variationen in den Sensoren und nicht beobachtbaren Störungen sind alle Schätzungen mit zufälligen Fehlern behaftet. Die Verfolgung und Voraussage des Anlagenverhaltens, wie auch die Regelung und Steuerung der Anlage, basieren auf diesen fehlerbehafteten Schätzungen.

Die Schätzung von Systemgrössen wird im Allgemeinen mit einem Kalmanfilter durchgeführt. Falls das System eine lineare Dynamik aufweist, bestimmt das Filter aus den Messwerten einen Punkt im Raum der Systemgrössen. Da jedoch die im System wirksamen physikalischen Gesetzmässigkeiten, beispielsweise Massen- und Energieerhaltungssätze, nicht alle linear sind, werden sie durch die Schätzung des Filters nicht erfüllt. Dadurch sind die Schätzungen für eine genaue Überwachung nicht von ausreichender Qualität.

Deshalb existieren Verfahren zur Datenvalidierung oder Abstimmung von Messdaten, auch Data Reconciliation-Verfahren oder "Ausgleichsrechnung mit Nebenbedingungen" genannt, die garantieren, dass die Messdaten und ein Zustand des Systems einen Satz vorgegebener physikalischer Gesetzmässigkeiten oder Randbedingungen, auch Modell genannt, erfüllen. Hier und im Folgenden wird der Begriff "Zustand" nicht im engeren Sinne der dynamischen Systemtheorie verwendet, also nicht nur für die minimale Information zur Beschreibung des zeitlichen Systemverhaltens, sondern im weiteren Sinne für alle Systemgrössen, die von Interesse sind. Ein Zustand wird als Vektor dargestellt. Einzelne Elemente dieses Vektors entsprechen einzelnen Systemgrössen. Sie werden im folgenden als Zustandselemente bezeichnet.

In einem Datenvalidierungsverfahren werden zu einem bestimmten Zeipunkt Messwerte durch eine vorgegebenen Menge von Sensoren ermittelt. Die Messwerte entsprechen einem Zustand des Systems oder entstehen durch bekannte physikalische Beziehungen aus dem Zustand. Das Verfahren bestimmt eine Schätzung des Zustands, welcher mit einem vorgegebenen Satz von physikalischen Randbedingungen konsistent ist, das heisst, dass die Schätzung des Zustandsvektors einen vorgegebenen Satz von Gleichungen erfüllt. Eine derartiges Verfahren ist beispielsweise in "Messunsicherheiten bei Abnahmemessungen an energieund kraftwerktechnischen Anlagen, Grundlagen", VDI-Richtlinie 2048, Blatt 1, Entwurf, 1998, Seiten 26 bis 28 beschrieben.

Bei bisherigen Datenvalidierungsverfahren wird eine Menge von Sensoren als gegeben angenommen, und es wird anhand der Daten dieser Sensoren sowie eines vorgegebenen Satzes von Randbedingungen eine möglichst gute Schätzung eines Zustands bestimmt. Ob die Wahl der Sensoren und der Randbedingungen zuwenig oder zuviel Information liefert, das heisst, ob die Information ausreichend oder optimal ist, wird dabei nicht berücksichtigt.

**Darstellung der Erfindung**

Es ist deshalb Aufgabe der Erfindung, ein Verfahren und eine Einrichtung zur Datenvalidierung zu schaffen, welche eine Auswahl von Sensoren und Randbedingungen erlaubt, die bezüglich der durch diese Sensoren gewonnene Information optimal ist.

Diese Aufgabe lösen ein Verfahren und eine Einrichtung zur Datenvalidierung mit den Merkmalen der Patentansprüche 1 und 6.

Im erfindungsgemässen Verfahren werden eine für die Datenvalidierung verwendete Menge von Sensoren und eine Menge von Randbedingungen derart bestimmt, dass nach Durchführen der Datenvalidierung die Genauigkeit eines jeden geschätzten Zustandelements höher ist als eine bestimmte, für jedes Zustandelement einzeln vorgegebene Genauigkeit.

Dadurch wird es möglich, die Anforderungen an das Messsystem, d.h. an die Gesamtheit der Sensoren sowie das Datenvalidierungsverfahren, explizite vorzugeben. Durch das erfindungsgemässe Verfahren wird festgestellt, welche Sensoren überhaupt benötigt werden. Umgekehrt wird auch bestimmt, ob für eine gegebene Instrumentierung, das heisst, für einen gegebenen Satz von Sensoren eine Datenvalidierung überhaupt notwendig ist. Das erfindungsgemässe Verfahren liefert auch eine Aussage darüber, ob eine bestimmte Instrumentierung einer Anlage ausreichend ist. In allen Fällen wird von den effektiven Anforderungen an das Messsystem ausgegangen, anstelle bestehende Messungen ad hoc zu erweitern oder zu kombinieren.

Das erfindungsgemässe Verfahren dient dem Design oder der Entwicklung von Anlagen mit Datenvalidierung, wobei der Entwicklungsaufwand verringert und die Notwendigkeit von Datenvalidierung beurteilt wird. Weiter werden durch Elimination von nicht notwendigen Sensoren Kosten für den Bau und den Betrieb einer Anlage gesenkt.

In einer bevorzugten Variante des erfindungsgemässen Verfahrens geschieht die Auswahl von Sensoren und Randbedingungen dadurch, dass iterativ Sensoren und/oder Randbedingungen zu einer Menge von Sensoren respektive Randbedingungen hinzugefügt werden, bis die Datenvalidierung die vorgegebenen Genauigkeiten erreicht.

Weitere bevorzugte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches mittels der beiliegenden Zeichnungen erklärt ist, näher erläutert. Es zeigen:

Figur 1      eine erste Messmodellstruktur;
Figur 2      eine zweite Messmodellstruktur;
Figur 3      ein Flussdiagramm eines erfindungsgemässen Verfahrens; und
Figur 4      eine erfindungsgemässe Einrichtung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

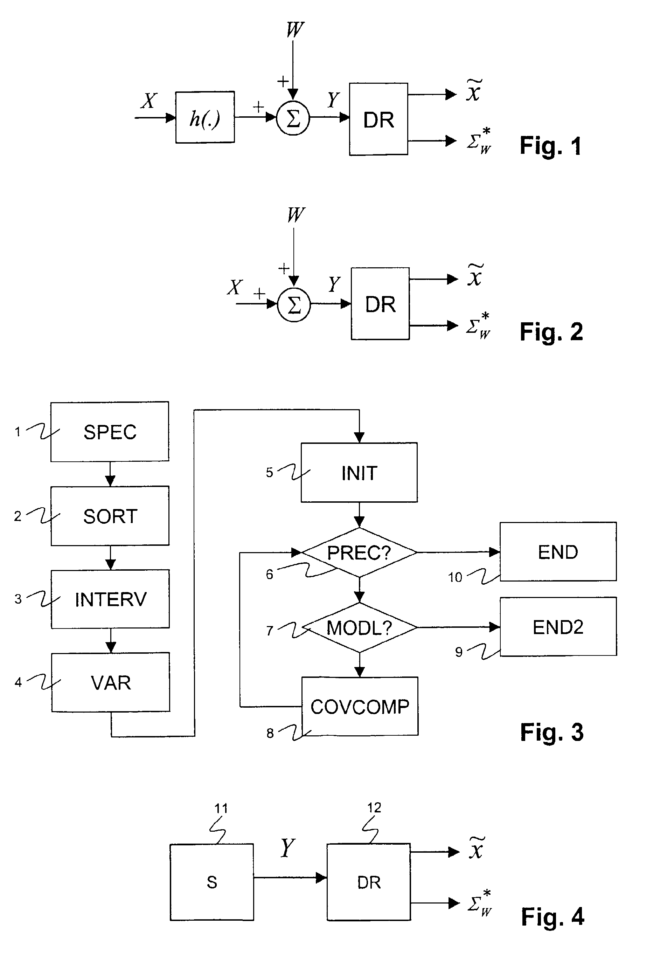

Die Figur 1 zeigt ein dem Verfahren zugrundeliegendes Modell einer Messstruktur: Ein System weist einen Zustand $X$ auf, aus dem durch eine Abbildung $h(X)$ ein Ausgang gebildet wird. Im klassischen Kalman-Filter ist $h(X)$ eine lineare Abbildung. Zum Ausgang wird ein Störsignal oder Messfehler $W$ addiert, woraus eine Messung Yerhalten wird, so dass also

$$Y=h(X)+W$$

ist. Alle Grössen $X$, $W$, $Y$ werden durch Vektoren repräsentiert. Eine Datenvalidierung DR ermittelt aus Werten der Messung $Y$ verschiedene Schätzwerte, unter anderem Schätzwerte $\tilde{x}$ des Zustands sowie eine Kovarianzmatrix $\Sigma_W^*$ von geschätzten Messfehlern. Die durch die Datenvalidierung DR ermittelten Schätzwerte des Zustands erfüllen vorgegebene Randbedingungen. Randbedingungen sind beispielsweise durch Massen-, Energie- oder Impulserhaltungssätze sowie Material- oder Bauteilekennlinien gegeben, oder durch mechanisch bedingte geometrische Einschränkungen der räumlichen Lage von Objekten. Materialkennlinien von beispielsweise Wasser als einem Arbeitsmedium sind durch Wasserdampftafeln beschrieben.

Als System ist ein technischer Prozess beliebiger Art zu verstehen, beispielsweise eine verfahrenstechnische Produktionsanlage, eine elektromechanischer Einrichtung oder eine Anlage zur Energieerzeugung, insbesondere ein thermisches Kraftwerk zur Erzeugung elektrischer Energie. Messwerte sind beispielsweise Drücke, Temperaturen, Massenströme, Spannungen, Ströme, Dichten oder Geschwindigkeiten. Sie werden durch Sensoren ermittelt.

Der Begriff "Zustand" wird nicht im engeren Sinne der dynamischen Systemtheorie verwendet, also nicht nur für die minimale Information zur Beschreibung des zeitlichen Systemverhaltens, sondern im weiteren Sinne für alle Systemgrössen, die von Interesse sind.

Die Figur 2 zeigt ein dem Verfahren zugrundeliegendes vereinfachtes Modell einer Messstruktur. Die Grössen und Zusammenhänge sind die gleichen wie in Figur 1, mit der Ausnahme, dass jedem Zustandselement eine Messung zugeordnet ist und h eine Identität ist, woraus

$$Y=X+W$$

resultiert. Zustände, die nicht einer realen Messung entsprechen, werden beispielsweise als Messungen mit einer Messgenauigkeit von Null betrachtet.

Die im Folgenden erwähnten Verfahren zur Datenvalidierung basieren beispielsweise auf einer Messtruktur gemäss Figur 1, die auch in der eingangs zitierte Anmeldeschrift beschrieben ist, oder auf einer Messtruktur gemäss Figur 2, die in der eingangs zitierten VDI-Richtlinie impliziert ist.

Der Messfehler $W$ repräsentiert beispielsweise Sensorrauschen. Er wird unabhängig von $X$ angenommen und wird durch additives Gauss'sches Rauschen mit Mittelwert Null und unkorrelierten Komponenten modelliert, also

$$W \sim N(0; \Sigma_W),$$

wobei die Kovarianzmatrix dieses Sensorrauschens oder Messfehlers gleich

$$\Sigma_W = \mathrm{diag}(\sigma_1^2, ..., \sigma_m^2)$$

ist. Die Genauigkeit eines $i$-ten Sensors ist als umgekehrt proportional zu seiner Varianz $\sigma_i^2$ definiert.

Eine Genauigkeitsanforderung, die ein Zustandselement nach einer Schätzung durch eine Datenvalidierung erfüllen muss, wird durch die Grösse eines Konfidenzintervalls dieses geschätzten Zustandselements wie folgt definiert:

Für Datenvalidierungsverfahren, wie sie beispielsweise in den eingangs erwähnten Schriften beschrieben sind, ist gemäss dem zentralen Grenzwertsatz bekannt, dass im Falle eines Satzes von linearen Randbedingungen *g(x)=0*, das heisst eines linearen physikalischen Modells, eine durch eine Datenvalidierung bestimmte konsistente Zustandsschätzung $\tilde{x}$ gaussverteilt mit Erwartungswert *x* und Kovarianzmatrix $\Sigma$ ist:

$$\tilde{x} \sim N(x, \Sigma)$$

Somit kann eine geforderte Genauigkeit beispielsweise dadurch ausgedrückt werden, dass die wahren Zustandswerte *x* mit einer Wahrscheinlichkeit P innerhalb eines vorgegebenen Konfidenzintervalls um die konsistenten Schätzwerte $\tilde{x}$ der jeweiligen Zustände liegen

$$x \in \left[\tilde{x} \pm s\right]$$

Im allgemeinen Fall sind die Randbedingungen *g(x)=0* nichtlinear. Die Datenvalidierung geht jedoch von einem kleinen Einfluss von Messungenauigkeiten aus, so dass die Randbedingungen um einen Messpunkt linearisiert werden können. Für die Auswahl von Sensoren gemäss dem erfinderischen Verfahren wird ebenfalls ein kleiner Einfluss von Messungenauigkeiten angenommen und das Modell um einen Betriebspunkt der Anlage linearisiert.

Die Bestimmung des konsistenten Schätzwertes $\tilde{x}$, also die Datenvalidierung, geschieht beispielsweise wie in den eingangs zitierten Schriften. Im Falle einer Messmodellstruktur gemäss Figur 2 wird beispielsweise das in "Messunsicherheiten bei Abnahmemessungen an energie- und kraftwerktechnischen Anlagen, Grundlagen", VDI-Richtlinie 2048, Blatt 1, Entwurf, 1998, beschriebene Verfahren angewendet. Insbesondere wird in dieser Schrift, wie in Gleichung (124) auf Seite 28 beschrieben, eine "Kovarianzmatrix $S_V$ der Verbesserungen" bestimmt. Im Folgenden wird diese Kovarianzmatrix als Kovarianzmatrix der geschätzten Messfehler $\Sigma_W^*$ bezeichnet. Sie ist ein Mass für den mittels der Randbedingungen bestimmten und korrigierten Fehler.

Das erfindungsgemässe Verfahren ermittelt die für die Datenvalidierung verwendeten Sensoren und Randbedingungen. Es ist im Flussdiagramm gemäss Figur 3 dargestellt und weist die folgenden Schritte auf:

Schritt 1: Vorgabe einer Menge *M* von Zustandselementen, die von Interesse respektive von Wichtigkeit sind. Vorgabe einer Wahrscheinlichkeit *P* für einen Hypothesentest, beispielsweise *P=0.95.*

Schritt 2: Sortieren aller Zustandselemente, so dass die ersten *r* Zustandselemente jene aus der Menge *M* sind.

Schritt 3: Vorgabe des Konfidenzintervalls $x \in [\tilde{x} \pm s]$ für jedes $x \in M$.

Schritt 4: Bestimmung von entsprechenden Varianzen einer Gaussverteilung anhand von *P* sowie der Konfidenzintervalle. Beispielsweise ist für *P*=0.95 gemäss einer Fehlerfunktion *erf* die Varianz

$$\sigma_i^2 = \frac{s_i^2}{1.96^2}$$

umgekehrt proportional zu einer vorgegebenen Genauigkeit eines *i*-ten Zustandselements.

Schritt 5: Setzen eines Index *k*=0. Beginn einer Iteration mit einem leeren Modell $g_0(x)$ mit einer Anzahl *c*=0 von Randbedingungen. Da keine Randbedingunden vorliegen, ist eine Kovarianz der geschätzten Zustandselemente $\Sigma_k$ nach der Datenvalidierung mit der Kovarianzmatrix der Messungen $\Sigma_W$ identisch, also ist $\Sigma_k = \Sigma_W$. Für jene Zustandselemente, die nicht einer Messung entsprechen, wird die Varianz auf einen grossen Wert gesetzt. Die Grösse dieser Varianzen wird durch physikalische Überlegungen aufgrund von Kenntnissen über das System begrenzt. Um numerischer Instabilität vorzubeugen, soll nicht der grösste Wert gewählt werden, den ein verwendetes Rechenprogramm verarbeiten kann.

Schritt 6: Die Diagonalelemente $(\Sigma_k)_{ii}$ der Kovarianz der geschätzten Zustandselemente $\Sigma_k$ sind umgekehrt proportional zur Genauigkeit der Schätzung des jeweiligen Zustandselements. Falls für jedes *i*=1,...,*r* eine Ungleichung

$$(\Sigma_k)_{ii} \leq \sigma_i^2$$

erfüllt ist, so sind die Varianzen der geschätzten Zustandselemente kleiner als die gemäss Schritt 4 geforderten Varianzen $\sigma_i^2$. Das heisst, dass die Genauigkeiten der geschätzten Zustandselemente ausreichend, also höher als die vorgegebenen Genauigkeiten sind. Damit ist eine ausreichende Menge von Sensoren gefunden worden. In diesem Fall wird mit Schritt 10 weitergefahren, andernfalls mit Schritt 7.

Schritt 7: Es wird *k k*+1 gesetzt und eine neues Modell gewählt. Dies geschieht durch Hinzufügen einer Randbedingung zu der Menge von Randbedingungen $g_k(x)$ oder durch Ersetzen einer Randbedingung aus der Menge von Randbedingungen. Dabei werden auch Sensoren der Menge von Sensoren hinzugefügt oder ersetzt, entsprechend dem Vorkommen der Messwerte der Sensoren in den Gleichungen. Dabei muss immer die Anzahl der Randbedingungen kleiner oder gleich der Anzahl der Sensoren sein. Falls kein neues, das heisst kein nicht bereits in vorangegangenen Iterationen verwendetes Modell gefunden wird, wird mit Schritt 9 weitergefahren.

Schritt 8: Anwendung eines Verfahrens zur Datenvalidierung und Berechnung der Kovarianzmatrix der geschätzten Messfehler $\Sigma_W^*$. Anhand der Kovarianz des Messfehlers $\Sigma_W$ wird die Kovarianz der geschätzten Zustandselemente als Differenz $\Sigma_k = \Sigma_W - \Sigma_W^*$ bestimmt und mit Schritt 6 weitergefahren. Es ist auch möglich, dass die Kovarianz der geschätzten Zustandselemente $\Sigma_k$ durch das Verfahrens zur Datenvalidierung selber bestimmt wird.

Schritt 9: Es ist keine Menge von Sensoren, die die Vorgaben erfüllt, gefunden worden. Das Verfahren ist beendet. Für eine erneute Anwendung des Verfahrens wird entweder

(a) die Anforderung an die Lösung verringert, indem die Konfidenzintervalle gemäss Schritt 3 vergrössert werden, oder indem die Menge *M* gemäss Schritt 1 verändert wird, oder
(b) die Instrumentierung modifiziert, indem neue Sensoren eingeführt werden oder indem bestehende Sensoren durch solche mit höherer Genauigkeit ersetzt werden.

Schritt 10. Ende des Verfahrens: Eine Menge von Randbedingungen wurde gefunden, mit welcher die geforderte Genauigkeit nach Validierung erreicht wird.

Falls nach Schritt 10 die Menge der Randbedingungen leer ist, so ist die Anwendung eines Datenvalidierungsverfahrens nicht notwendig.
In einer vorteilhaften Variante der Erfindung geschieht die Auswahl eines neuen Modells in Schritt 7 in folgender Weise: Aus der Menge der noch nicht verwendeten Sensoren wird jener mit einer höchsten relativen Genauigkeit ausgewählt. Eine Randbedingung, welche die Messwerte dieses Sensors sowie von bisher verwendeten Sensoren beinhaltet, wird der Menge von Randbedingungen hinzugefügt oder ersetzt eine Randbedingung aus der Menge von Randbedingungen. In dieser Variante wird die Anzahl von Sensoren und Randbedingungen im Allgemeinen kleiner ausfallen als bei einer zufälligen Auswahl von Randbedingungen.
In einer weiteren vorteilhaften Variante der Erfindung wird in den Schritten 5 und 7 berücksichtigt, dass gewisse Sensoren aus gesetzlichen, Sicherheits- oder Schutzgründen zwingend vorhanden sein müssen. Eine Elimination dieser Sensoren durch das erfindungsgemässe Verfahren bringt somit keine Einsparungen, so dass beispielsweise in Schritt 5 oder 7 diese Sensoren als ständig vorhanden angenommen werden.
Figur 4 zeigt eine erfindungsgemässe Einrichtung. Diese weist eine Sensoreinheit 11 und eine Datenverarbeitungseinheit zur Datenvalidierung 12 auf. Die Sensoreinheit 11 weist eine Menge von Sensoren sowie beispielsweise den Sensoren zugeordnete Anpassungs-, Vorverarbeitungs-, Filter- und Übertragungsuntereinheiten für Sensordaten auf. Die Datenverarbeitungseinheit zur Datenvalidierung 12 weist eine Rechenuntereinheit zur Durchführung eines Datenvalidierungsverfahrens und zur Bestimmung von konsistenten Zustandsschätzwerten $\tilde{x}$ und einer Kovarianzmatrix von geschätzten Messfehlern $\Sigma_W^*$ auf, sowie eine Speicheruntereinheit zur Speicherung eines Satzes von Randbedingungen, die im Datenvalidierungsverfahren zu verwenden sind. Die Sensoreinheit 11 und die Datenverarbeitungseinheit zur Datenvalidierung 12 sind über ein Mittel zur Übertragung eines Vektors *Y* von Messwerten miteinander verbunden.
Die Menge von Sensoren 11 und der Satz von Randbedingungen sind durch das erfindungsgemässe Verfahren derart bestimmt, dass eine durch das Datenvalidierungsverfahren ermittelte Genauigkeit eines Zustandsschätzwertes elementweise höher ist als eine bestimmte, für jedes Zustandselement einzeln vorgegebene Genauigkeit.

**Bezugszeichenliste**

DR  Datenvalidierung
1  Vorgabe einer Menge *M* von interessierenden Zuständen, SPEC
2  Sortieren aller Zustände, SORT
3  Vorgabe von Konfidenzintervallen, INTERV
4  Bestimmung von Varianzen, VAR
5  Initialisierung der Sensorwahl, INIT
6  Test, ob Genauigkeit ausreichend, PREC?
7  Wahl eines neuen Modells, MODL?
8  Berechnung der neuen Genauigkeit, COVCOMP
9  Keine Lösung für gegebene Anforderungen gefunden, END2
10  Lösung gefunden, END
11  Sensoreinheit, S
12  Datenverarbeitungseinheit zur Datenvalidierung

**Patentansprüche**

1.  Verfahren zur Bestimmung einer Menge von Sensoren und einer Menge von Randbedingungen zur Verwendung in einer Datenvalidierung, bei dem anhand von Messwerten der Menge von Sensoren sowie anhand von der Menge von Randbedingungen eine Schätzung eines aus Zustandselementen bestehenden Zustandes eines Systems bestimmt wird,
dadurch gekennzeichnet, dass die Menge von Sensoren sowie die Menge von Randbedingungen derart bestimmt werden, dass nach Durchführen der Datenvalidierung eine Genauigkeit eines jeden geschätzten Zustandselements höher ist als eine bestimmte, für jedes Zustandselement einzeln vorgegebene Genauigkeit.

2. Verfahren gemäss Anspruch 1, dadurch gekennzeichnet, dass die Genauigkeit eines geschätzten Zustandselements umgekehrt proportional zum Wert eines Diagonalelementes einer Kovarianzmatrix der geschätzten Zustandselemente gewählt wird.

3. Verfahren gemäss Anspruch 1, dadurch gekennzeichnet, dass zur Bestimmung der Menge von Randbedingungen und der Menge von Sensoren diese Mengen variiert werden, bis eine Datenvalidierung anhand dieser Mengen die vorbestimmte Genauigkeit erfüllt, oder bis alle möglichen Variationen der Mengen ausgeschöpft sind.

4. Verfahren gemäss Anspruch 3, dadurch gekennzeichnet, dass in einem Iterationsschritt die Menge der Sensoren um denjenigen Sensor erweitert wird, der eine höchste relative Genauigkeit aufweist, und die Menge der Randbedingungen um eine Gleichung erweitert wird, die einen Messwert dieses Sensors enthält.

5. Verfahren gemäss Anspruch 4, dadurch gekennzeichnet, dass die Genauigkeit eines Sensors als umgekehrt proportional zu einer Varianz von Messwerten des Sensors gewählt wird.

6. Einrichtung zur Datenvalidierung mit einer Sensoreinheit (11) mit einer Menge von Sensoren und einer Datenverarbeitungseinheit zur Datenvalidierung (12) zur Bestimmung von Schätzwerten von Zustandselementen anhand von Messwerten der Sensoren, wobei die Schätzwerte von Zustandselementen eine Menge von Randbedingungen erfüllen,
dadurch gekennzeichnet, dass die Menge von Sensoren und die Menge von Randbedingungen dergestalt sind, dass eine Genauigkeit eines jeden Schätzwertes eines Zustandselements höher ist als eine bestimmte, für jedes Zustandselement einzeln vorgegebene Genauigkeit.

**Fig. 1**

**Fig. 2**

**Fig. 3**

**Fig. 4**

**Europäisches Patentamt**

# EUROPÄISCHER RECHERCHENBERICHT

Nummer der Anmeldung

EP 99 81 0486

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | ZASADZINSKI M ET AL: "ESTIMATION DE L'ETAT POUR UNE CLASSE DE SYSTEMES SINGULIERS. APPLICATION A LA VALIDATION DE DONNEES" AUTOMATIQUE-PRODUCTIQUE INFORMATIQUE INDUSTRIELLE,FR,PARIS, Bd. 26, Nr. 2, Seite 107-124 XP000856658 ISSN: 0296-1598 | 1,6 | G05B13/04 |
| A | V.KURKIN : "ALGORITHM FOR ADAPTIVE ESTIMATION OF THE LOAD IN A COMPUTER SYSTEM" AUTOMATIC CONTROL AND COMPUTER SCIENCES, Bd. 18, Nr. 4, 1984, Seiten 1-7, XP000856834 USA * das ganze Dokument * | 1,6 | |
| A | A.KRETSOVALIS: "EFFECT OF REDUNDANCY ON ESTIMATION ACCURACY IN PROCESS DATA RECONCILIATION" CHEMICAL ENGINEERING SCIENCE, Bd. 42, Nr. 9, 1987, Seiten 2115-2121, XP000856678 UK * das ganze Dokument * | 1,6 | **RECHERCHIERTE SACHGEBIETE (Int.Cl.7)** G05B |
| A | Y.MOON ET AL: "DESIGN OF RELIBLE MEASUREMENT SYSTEM FOR STATE ESTIMATION" IEEE TRANS.POWER SYST., Bd. 3, Nr. 3, August 1998 (1998-08), Seiten 830-836, XP000857124 USA * das ganze Dokument * | 1,6 | |

-/--

Der vorliegende Recherchenbericht wurde für alle Patentansprüche erstellt

| Recherchenort | Abschlußdatum der Recherche | Prüfer |
|---|---|---|
| DEN HAAG | 8. Dezember 1999 | Kelperis, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

**EUROPÄISCHER RECHERCHENBERICHT**

Nummer der Anmeldung

EP 99 81 0486

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | CHEN R C ET AL: "OPTIMAL MEASUREMENT SCHEDULING FOR TRACK ACCURACY CONTROL FOR CUED TARGET ACQUISITION" PROCEEDINGS OF THE SPIE, XP000856650 * das ganze Dokument * | 1,6 | |
| A | MEHDI D ET AL: "DATA RECONCILIATION IN LARGE SCALE QUASI STEADY STATE SYSTEMS" PROCEEDINGS OF THE SUMMER COMPUTER SIMULATION CONFERENCE, XP000856663 | 1,6 | |
| A | J.KELLER ET AL: "DATA RECONCILIATION AND GROSS-ERROR DETECTION IN STATIC MULTI-LINEAR SYSTEMS" IDENTIFICATION AND SYSTEM PARAMETER ESTIMATION, Bd. 2, 8. Juli 1991 (1991-07-08), Seiten 755-760, XP000856577 HUNGARY * das ganze Dokument * | 1,6 | |
| A | Y.ISHIDA ET AL : "DATA RECONCILIATION COMBINED WITH DATA EVALUATION BY SENSOR NETWORKS" PROCEEDINGS OF THE 35TH IEEE CONFERENCE ON DECISION AND CONTROL, Bd. 1, 11. Dezember 1996 (1996-12-11), Seiten 138-141, XP002124991 JAPAN * das ganze Dokument * | 1,6 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 8. Dezember 1999 | Kelperis, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)